(19) **Europäisches Patentamt**
**European Patent Office**
**Office européen des brevets**

(11) **EP 3 470 817 B1**

(12) **EUROPEAN PATENT SPECIFICATION**

(45) Date of publication and mention
of the grant of the patent:
**19.08.2020 Bulletin 2020/34**

(51) Int Cl.:
***G01N 15/06*** *(2006.01)*       ***C12M 1/34*** *(2006.01)*
***G01N 15/00*** *(2006.01)*

(21) Application number: **18188822.3**

(22) Date of filing: **14.08.2018**

(54) **METHOD AND SYSTEM FOR COUNTING WHITE BLOOD CELLS ELECTRICALLY**

VERFAHREN UND VORRICHTUNG ZUR ELEKTRISCHEN ZÄHLUNG VON WEISSEN BLUTZELLEN

PROCÉDÉ ET SYSTÈME PERMETTANT DE COMPTER ÉLECTRIQUEMENT DES GLOBULES BLANCS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.08.2017 US 201715676266**

(43) Date of publication of application:
**17.04.2019 Bulletin 2019/16**

(73) Proprietor: **United Arab Emirates University**
**Al Ain (AE)**

(72) Inventors:
• **AL AHMAD, Mahmoud F. Y.**
**Al Ain (AE)**
• **ALHASSANI, Shamsa Abdulla Saeed Ali**
**Al Ain (AE)**
• **ALNEYADI, Nouf Ali Salem Mohammed**
**Al Ain (AE)**
• **ALTAMIMI, Meera Rashed Salem Obaid**
**Al Ain (AE)**

(74) Representative: **Høiberg P/S**
**Adelgade 12**
**1304 Copenhagen K (DK)**

(56) References cited:
**US-A1- 2008 262 748       US-A1- 2017 160 232**

• **Hugo Fricke ET AL: "Relation of the Permittivity of Biological Cell Suspensions to Fractional Cell Volume", Nature, 17 October 1953 (1953-10-17), pages 731-732, XP055566619, DOI: 10.1038/172731a0 Retrieved from the Internet: URL:https://www.nature.com/articles/172731 a0.pdf [retrieved on 2019-03-08]**
• **VYKOUKAL ET AL: "Dielectric characterization of complete mononuclear and polymorphonuclear blood cell subpopulations for label-free discrimination", INTERNET CITATION, 2 June 2009 (2009-06-02), pages 477-484, XP002765653, Retrieved from the Internet: URL:http://pubs.rsc.org/en/content/article pdf/2009/ib/b906137a [retrieved on 2017-01-02]**

**Description**

**CROSS-REFERENCE AND RELATED APPLICATION**

This application is a continuation-in-part from Application No. 15/121,958, which is a national Stage of International Application No. PCT/IB20 14/064042 filed on 25 August 2014, which is published as full prior art publication WO 2016/030713 A1.

**TECHNICAL FIELD**

This invention relates generally to a method and a system for determining cell characteristics and more specifically, to a method for determining electrically white blood cells count and a system configured to establish same.

**BACKGROUND**

One of the most universally used medical diagnostic lab procedures is the analysis of blood or a patient and identifying the red blood cell count and the white blood cell count in order to determine certain characteristics of such blood. This in turn enables medical practitioners to gain an insight into the patient's health in general and to potentially determine any unwanted intrusions into the patient's body, which could allow for diagnosing the patient.

In recent years, several sensing modalities for detecting and quantifying of biological and chemical analytes in general have been proposed. One of the conventional techniques used for detecting biological analytes in general and blood cells specifically is based on fluorescence exhibited by many analytes of interest generally and blood cells specifically. According to this technique, visible or detectable markers are attached to the blood cells in a blood sample. This method is known as staining. The markers are chosen based on their properties to attach to certain types of biological analytes in the cell but not others. This process is passive and does not change the properties of the analyte of interest but rather change the way it is detected. A complex optical assembly including high intensity optical sources, optical filters and lenses, is then used to detect frequency range of emission, which serve to characterize the analyte of interest.

In cases where the analyte is blood, once the blood sample is stained, manual detection is usually done under a microscope where stained blood cells of interest are counted. The blood count then allows the practitioner to make his or her diagnosis based on the results obtained.

Although such techniques provide good selectivity and sensitivity, the fluorescence-based sensing devices are inherently cumbersome, time consuming, expensive and accordingly, not suitable for many applications such as point-of-care diagnostics.

There is a desire in the field to achieve reliable, time efficient, and cost-effective techniques for identification and quantification of biological and chemical analytes. A prior art electrical technique that describes the correlation between the electrical permittivity and the fractional cell volume of leucocytes is disclosed by Fricke, Nature 172, 731-732 (1953).

**SUMMARY OF THE INVENTION**

The current disclosure has several aspects. In one aspect of the invention, a method is described for quantifying white blood cells in a blood sample, the method comprising the steps of: depositing the blood sample to a sample medium. The sample medium is positioned between a first electrode and a second electrode, wherein the first electrode comprises one of a moveable electrode or an array of electrodes arranged to cover different positions of the sample medium and for measuring capacitance across the sample medium for each of the different positions. The method also includes providing a pulsating sweep voltage across the first electrode and the second electrode such that a potential gradient is formed across the sample medium. The method further includes depositing a chemical analyte to the blood sample on the same medium. The chemical analyte is for exclusively combining with the white blood cells of the blood sample and for changing the capacitance of the blood sample. The method additionally includes determining a capacitance-voltage profile of the blood sample, before and after depositing the chemical analyte and quantifying the white blood cells in the blood sample based on the determined capacitance-voltage profile.

In a related embodiment, the step of quantifying the white blood cells in the blood sample comprises determining the difference between the capacitance-voltage profile of the blood sample before and after depositing the chemical analyte.

In a related embodiment, the step of determining the capacitance-voltage profile of the blood sample before and after depositing the chemical analyte comprises measuring the capacitance at multiple position on the sample medium and averaging the capacitance measured for a voltage value from the pulsating sweeping voltage.

In a related embodiment, the method further comprises comparing the quantified white blood cells in the blood sample against a look-up table comprising values of known cell counts for known white blood cell types and determining a presence of an abnormality in the blood sample based on the comparison.

In a related embodiment, quantifying the white blood cells in the blood sample is established by the ratio of a total Debye volume of the blood sample; over a volume of a single white blood cell multiplied by the ratio between an extracted Debye length of the blood sample and an extracted Debye length of the sample medium.

In another aspect of the invention, a system for quantifying white blood cells in a blood sample is described. the system comprises a sample medium for holding the blood sample, the sample medium being positioned between a first electrode and a second electrode. The system also includes an electrical analyzer electrically coupled to the first electrode and the second electrode, the electrical analyzer supplying pulsating sweeping voltage across the first electrode and the second electrode such that potential gradient is formed across the sample medium. The electrical analyzer is further configured for measuring capacitance across the sample medium for a given value of pulsating sweeping voltage before and after depositing a chemical analyte to the blood sample to generate a capacitance-voltage profile. The chemical analyte is for exclusively combining with the white blood cells of the blood sample and for changing the capacitance of the blood sample. The system further including a general processor in communication with the electrical analyzer, the general processor configured for quantifying the white blood cells in the blood sample based on the generated capacitance-voltage profile. The system is characterised in that the first electrode comprises one of a moveable electrode or an array of electrodes arranged to cover different positions of the sample medium and for measuring capacitance across the sample medium for each of the different positions.

In a related embodiment, the second electrode is a fixed electrode resting on a substrate for supporting the second electrode.

In a related embodiment, movement of the moveable electrode is controlled by a controller, where the controller is in wired or wireless communication with the general processor.

In a related embodiment, the moveable electrode has a surface areal less than a surface area of the second electrode or the sample medium.

In a related embodiment, the general processor controls movement of the controller for moving the first electrode to different positions relative to the sample medium, wherein capacitance is measured for each of the different positions.

In a related embodiment, the general processor determines the quantification of the white blood cells in the blood sample by establishing the ratio of a total Debye volume of the blood sample; over a volume of a single white blood cell multiplied by the ratio between an extracted Debye length of the blood sample and an extracted Debye length of the sample medium.

Other aspects of the invention will be apparent as will be shown in the detailed description of the invention.

## BRIEF DESCRIPTION OF THE DRAWINGS

The accompanying drawings illustrate non-limiting example embodiments of the present disclosure.

FIG. 1 shows a schematic view of a system for counting white blood cells electrically according to an exemplary embodiment of the present disclosure.

FIG. 2 shows a table flow chart describing the steps of the method used to determine the white blood count in the system shown in FIG. 1.

## DEATAILED DESCRIPTION

Throughout the following description specific details are set forth in order to provide a more thorough understanding to persons skilled in the art. However, well known elements may not have been shown or described in detail to avoid unnecessarily obscuring the disclosure. The following description of examples of the technology is not intended to be exhaustive or to limit the system to the precise forms of any example embodiment. Accordingly, the description and drawings are to be regarded in an illustrative, rather than a restrictive, sense.

The current disclosure relies on a basic concept of utilizing specific highly selective types of chemicals that have the properties to interact with only the specific type of blood cells of interest. Once such chemicals interact with the cells of interest, such interaction has the effect of changing intrinsic qualities of the cells such as their electrical characteristics. When the blood cells of interest are white blood cells, the technique described in this disclosure allows for electrically obtaining the white blood cell count in the blood sample without the need for traditional visual detection techniques. Calculated white blood cell count based on electrical measurements allows for easy and cost-efficient technique to obtain information that allows medical practitioners to diagnose patients quickly without jeopardizing accuracy.

The use of electrical characteristics for the identification and quantification of biological analytes have been disclosed in US Patent Application No. 15/121,958 , published as US 2017/0160232 A1. In this current disclosure the inventors focus on a related technique for the quantification of white blood cells in a blood sample. However, it is to be understood that the same or similar techniques may be used for quantification of other cells and biological or none biological entities in a biological sample.

White blood cells (WBCs), also called leukocytes, are an important part of the immune system. There are five types of WBCs. These are divided into two main classes Granulocytes (includes Neutrophils, Eosinophils and Basophils) and Agranulocytes (includes Lymphocytes and Monocytes). It is easy to confuse the different leucocytes in blood smears. To identify them, one needs to look for the shape of the nucleus, and compare their size, relative to that of a red blood cell. A low or high WBC count can point to a blood disorder or other medical condition. Leukocytosis is the medical term used to describe a high WBC count. This can be triggered by: anemia, tumors in the bone marrow, inflammatory conditions, such as arthritis and bowel disease, stress, exercise, tissue damage, pregnancy, allergies, asthma and leukemia.

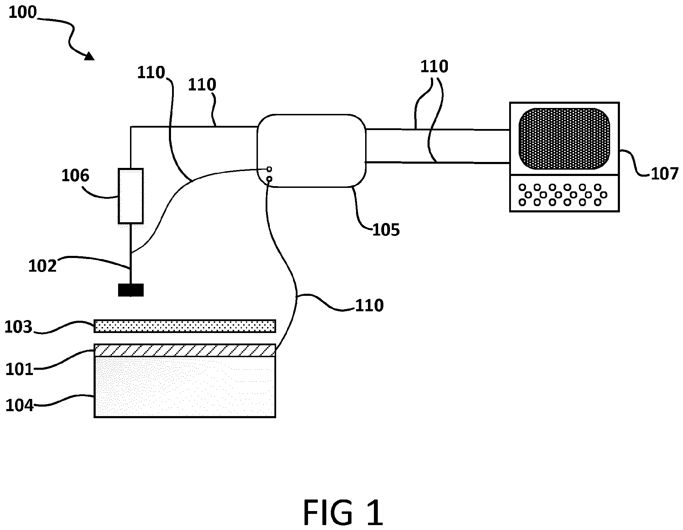

Referring to FIG. 1, a schematic view of system 100 is described for quantification of WBCs in a blood sample in accordance with an exemplary embodiment of the present invention. System 100 comprises a fixed electrode 101 and a moveable electrode 102 to measure capacitance at different locations of a strip 103 positioned between the electrodes. The fixed electrode is deposited on a substrate 104 for supporting the fixed electrode103. An electrical analyzer 105 is electrically connected to both fixed electrode 103 and moveable electrode 102 via electrical connections 110 to establish and control a potential difference between the two electrodes. The Electrical analyzer 105 is configured to provide a pulsating sweeping voltage to the two electrodes. Capacitance is measured across the fixed and moveable electrodes under the pulsating sweep voltage applied across the electrodes to generate capacitance-voltage profile of the blood sample, which can be used to quantify WBCs in the blood sample, as well be described in detail in a later section of this disclosure.

In the example provided in FIG. 1, moveable electrode 102 is moved and is positions at different locations over the strip 103 and capacitance measurements are obtained for the strip 103 for each of the locations the moveable electrode is moved to. The movement and positioning of the movable electrode 102 is controlled by a control unit 106. The controller 106 may be powered by its own power supply (not shown) or may be powered by voltage supplied from the electrical analyzer 105.

The control unit 106 as well as the voltage pulsating frequency are controlled by a general processor 107 and are connected to it by means of electrical connections 110. In some embodiments, the connection between the controller 106 and the general processor 107 may be wirelessly. In some embodiments, the control unit 106 may be controlled independently from the voltage pulsating frequency. Values of capacitance measured are stored on a memory storage device (not shown) that may be internal or external to the general processor 107.

By having a moveable electrode 102 in system 100, the system allows for collecting multiple capacitance measurements for the same or different pulsating voltage at different locations of the strip 103. This provides accuracy of capacitance measurements using averaging techniques known in the art. In other embodiments (not shown), the moveable electrode 102 may be replaced with an array of electrodes located at prearranged or random locations relating the strip 103. In other embodiments, the arrangement of the electrodes in the electrode array may be configured in accordance with the user's input, which may be programmed into the general processor 107 in accordance with the type and duration of the tests to be conducted.

It should be noted that various electrical properties of the blood sample as measured using system 100 represent the cumulative effect of the electrical properties of the blood and a medium carrying the blood, which is described in FIG. 1 to be strip 103. As will be appreciated, to determine the electrical properties attributable to the WBCs present in the blood sample, it is imperative to take into account the electrical properties of the medium 103 as well as the electrical properties of any chemicals introduced into the strip 103 during operation of system 100.

The current disclosure describes a technique in which WBC count may be achieved only by obtaining a series of electrical measurements such as capacitance measurements of a blood sample using the system described in FIG. 1. As described above, in order to distinguish WBCs in the blood sample that is deposited on a testing strip from other cells such as the red blood cells, a chemical with special characteristics is added to the strip. The function of such chemical is to change the electrical characteristics of only the WBCs without affecting the electrical characteristics of the other elements in the blood sample. Any known chemical known in the art with such characteristics may be used.

By changing the electrical characteristics of the WBCs in the blood sample, it is then understood that capacitance of the blood sample is changed when measured before and after the insertion of the chemical. It is assumed in this technique that capacitance of the chemical, the blood and the strip are additive. The change in capacitance depends on the number of cells inside the blood sample, the chemical added, electrical characteristics of the strip, and the blood content. In designating C1 as the capacitance of the strip by itself, C2 as the capacitance of the strip with the chemical on it, C3 as the capacitance of the strip with the blood sample on it, and C4 as the capacitance of the strip with both the blood and chemical on it, the following mathematical model can be presented:

$$C_2 = C_1 + C_c \qquad\qquad (1)$$

$$C_3 = C_1 + C_b \qquad\qquad (2)$$

$$C_4 = C_1 + C_c + C_b* \qquad\qquad (3)$$

$C_1$ is a constant value that can be deembedded from other capacitance values. For a single type of chemical, $C_2$ also has a constant value and depend on the added chemical properties. This value also could be deembedded. It is worth noting that the effective capacitance $C_2$ is a parallel combination between the capacitance of the strip $C_1$ and the capacitance of the chemical by itself $C_c$. This is seen in Equation (1) above.

$C_3$ is a variable capacitance, which is based on the blood content. As described in equation (2) above, $C_3$ is expressed as the sum of the constant capacitance value of the strip $C_1$ and the varied capacitance of the blood sample $C_b$. The variance of capacitance for $C_b$ depends mostly on multiple variables including but not limited to the health of the subject from which the blood was taken, the type of food consumed by the person, the age of the person as well as the emotional state of the person among other factors. It is assumed that the capacitance of the blood is independent from that of the strip and is not varied because of the position of the blood on the strip.

$C_4$ in equation (3) above describes the capacitance of the strip, blood and chemical, where it is assumed that the capacitance is parallel and therefore additive. However, it is noted that since the chemical is introduced to the blood, the blood's capacitance is varied from that of the capacitance of the blood without the chemical. This is represented in equation (3) by designating the capacitance of the blood after introducing the chemical as $C_b*$.

The change in capacitance due to the chemical interaction with the blood is expressed as:

$$\Delta C = C_b* - C_b \qquad\qquad (4)$$

By manipulating the equations (1) to (4) above, the change in capacitance cab be expressed in terms of electrically measurable quantities, namely by the expression in equation (5) below:

$$\Delta C = C_4 - C_3 - C_2 + C_1 \qquad\qquad (5)$$

As the chemical used will only interact with WBC to change its electrical characteristics and will not affect other elements in the blood, therefore, the capacitance change described in equation (4) can be used to obtain a capacitance-voltage profile by measuring the change in blood capacitance over a sweep of voltage pulsating value. Subtracting the capacitance value of the blood before and after it is affected by the chemical has the result of allowing the established value to be directly correlated to the WBC count in the blood sample. By collecting the capacitance change measurements over the sweep of voltage pulsating values, the capacitance voltage profile may then be used to determine the WBC count as will be described below.

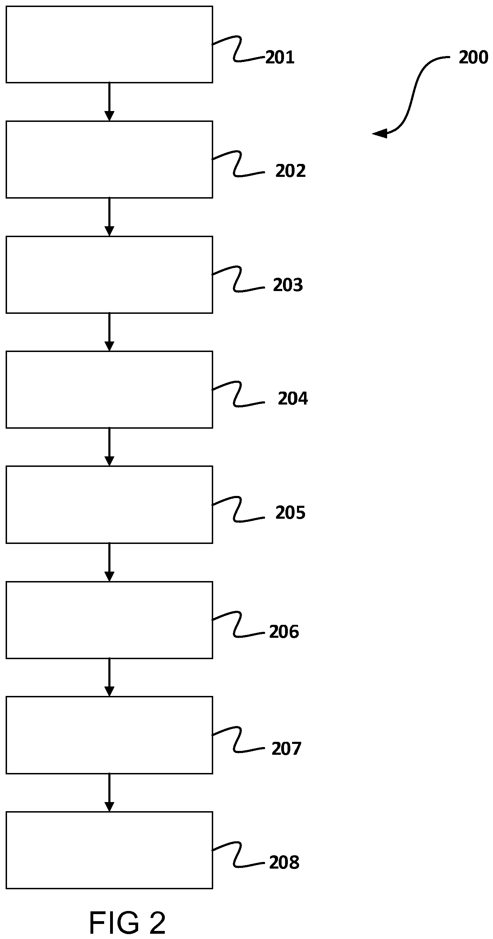

Referring now to FIG. 2, a flow chart is shown in which a method of operating the system 100 is described for quantification of WBCs in a blood sample in accordance with an exemplary embodiment of the present disclosure. In this embodiment, the system 100 is operated in accordance with a method 200 to quantify WBC's in a blood sample. In a preliminary step, the strip 103 is placed between the fixed electrode 101 and either the movable electrode or a fixed array of electrodes. A voltage is applied across the two electrodes and a capacitance is measured for the strip 103. It is noted that repetition of this step is only required once and that the same capacitance value will act as a constant value so long as the material of the strip is unchanged. In a second step that also does not need to be repeated, a chemical is added to the step and a voltage is applied across the two electrodes. Capacitance for the strip and chemical is measured and is considered a constant for a fixed voltage value so long as the chemical or strip are unchanged.

In Step 203, a blood sample is placed on a second strip and the strip is placed between the electrodes 101 and 102. Voltage is applied from the electrical analyser across the two electrodes 101 and 102 and capacitance is measured for the strip and blood on it. In step 204, the chemical is added to the blood on the strip. Voltage is applied from the electrical analyser and capacitance of the strip, blood and chemical is measured. In step 205, a capacitance-voltage profile of the blood sample is determined. In step 206, the WBC count of the blood sample is quantified based on the capacitance-voltage profile determined.

The number of cells of interest such as WBC or in other exemplary embodiments, red blood cells, present in the medium or sample blood can be quantified by directly linking to the Debye length. Debye length represents an electrical parameter that can be extracted from capacitance-voltage measurements. The basic premise of the technique described in the current disclosure is to consider the buffer control media as a homogenous media along with the other blood contents exempt the white/or red cells and the cells suspended as impurities. Mathematically, the count of the cells is estimated by calculating the impurities inside a defined volume by observing the change in electrical parameters. From the capacitance-voltage measurements, the doping concentration ($N$) and the Debye Length ($L_D$), can then be computed as follows:

$$N = \left| \left( 0.5 q \varepsilon A^2 \frac{d(c^{-2})}{dV} \right)^{-1} \right| \qquad (6)$$

$$L_D = \sqrt{\frac{\varepsilon KT}{q^2 N}} \qquad (7)$$

Where: $A$ is the capacitor overlapping area; $\varepsilon$ is the dielectric constant of the mock material. $K$, $T$ and $q$ are Boltzmann constant, temperature and electron charge, respectively. The count of cells is suggested empirically to be estimated using the following equation:

$$\text{Count} = (L_{sd}/L_{dm})(A_n \times L_{sd})[Ex_{volume}]^{-1} \qquad (8)$$

Where: $L_{sd}$ is the corresponding extracted Debye length for specific suspension (i.e. the sample blood). $L_{dm}$ is the extracted Debye length for buffer control (i.e. the medium without blood) and $Ex_{volume}$ is the single cell average volume. $A_n$ is a normalized area and is equal to 1 by 1 m². Equation (8) states that empirically, the number of cells presented in a suspension is approximately equal to the ratio of the corresponding total Debye volume ($A_n L_{sd}$) over the volume of single cell multiplied by the ratio ($L_{sd}/L_{dm}$).

Once the WBC count is determined in the blood sample tested, the value is compared in step 207 against values on a look-up table for known WBC types. Table

1 below shows normal WBC counts for different known WBC types. Table 2 shows a correlation between known diseases and WBC.

**Table1:** WBC counts with different diseases types and corresponding sizes of WBC

|  | Shape | WBC's numbers | Size (diameter) Before Disease |
|---|---|---|---|
| Neutrophils | | 2000-7000 | 12-14 $\mu$m |
| Lymphocytes | | 1000-3000 | 10-14 $\mu$m |
| Monocytes | | 200-1000 | can be up to 20$\mu$m |
| Eosinophils | | 20-500 | 12 - 17 $\mu$m |

(continued)

| | Shape | WBC's numbers | Size (diameter) Before Disease |
|---|---|---|---|
| Basophils | | 20-1000 | 14-16 μm |

**Table 2**: WBC counts with leukemia types

| Leukemia Types | WBC's Numbers |
|---|---|
| Chronic lymphocytic leukemia (CLL) | B-cell :greater than 4000 cells per microliter (μl) of blood, but can be much higher |
| Acute myeloid leukemia (AML) | Normal white blood (not enough red blood and plast) |
| Chronic myeloid leukemia (CML) | Greater than 4000 cells with many early (immature) cells |
| Acute lymphocytic leukemia (ALL) | People with a lower WBC count (less than 30,000 for B-cell ALL and less than 100,000 for T-cell ALL) |

In step 208, a determination of the existence of abnormalities in the blood sample is made based on the comparison. In some embodiments, where the WBC count is determined to be within the normal range, the user is prompted on the screen of the result and this concludes the operation of system 100. In other embodiments, the system may transmit a signal to a health professional or to a health centre for monitoring the results of the test subject.

In other embodiments, where the WBC count is found to be outside the normal range, the user is prompted of the result and a signal containing the results of the test is transmitted to a health professional or to a health centre for monitoring the results of the test subject. The system may also prompt the use to take an appointment with the health professional to review the results transmitted.

The present disclosure provides a sensing system and a sensing method for quantification of WBCs in a blood sample. The techniques described facilitate label free, reliable, rapid, and low-cost quantification. The techniques of the present disclosure advantageously do not require elaborate sample preparation such as labelling using biomarkers, staining, and so on and are able to produce accurate and reliable results based on electrical measurements of a simply extracted blood sample from the subject. The system described in this disclosure may be used to diagnose certain types of cancer based solely on electrical measurements of a simply extracted blood sample from the subject.

Interpretation of Terms

Unless the context clearly requires otherwise, throughout the description and the claims:

- "comprise," "comprising," and the like are to be construed in an inclusive sense, as opposed to an exclusive or exhaustive sense; that is to say, in the sense of "including, but not limited to".
- "connected," "coupled," or any variant thereof, means any connection or coupling, either direct or indirect, between two or more elements; the coupling or connection between the elements can be physical, logical, or a combination thereof.
- "herein," "above," "below," and words of similar import, when used to describe this specification shall refer to this specification as a whole and not to any particular portions of this specification.
- "or," in reference to a list of two or more items, covers all of the following interpretations of the word: any of the items in the list, all of the items in the list, and any combination of the items in the list.
- the singular forms "a", "an" and "the" also include the meaning of any appropriate plural forms.
- "subject" refers to a human or other animal. It is intended that the term encompass patients, such as vocally-impaired patients, as well as inpatients or outpatients with which the present invention is used as a diagnostic or monitoring device. It is also intended that the present invention be used with healthy subjects (i.e., humans and other animals that are not vocally-impaired, nor suffering from disease). Further, it is not intended that the term be limited to any particular type or group of humans or other animals.

- "power source" and "power supply" refer to any source of electrical power in a form that is suitable for operating electronic circuits.

Words that indicate directions such as "vertical", "transverse", "horizontal", "upward", "downward", "forward", "backward", "inward", "outward", "vertical", "transverse", "left", "right" , "front", "back" , "top", "bottom", "below", "above", "under", "upper", "lower" and the like, used in this description and any accompanying claims (where present) depend on the specific orientation of the apparatus described and illustrated. The subject matter described herein may assume various alternative orientations. Accordingly, these directional terms are not strictly defined and should not be interpreted narrowly.

Where a component (e.g. a circuit, module, assembly, device, etc.) is referred to above, unless otherwise indicated, reference to that component (including a reference to a "means") should be interpreted as including as equivalents of that component any component which performs the function of the described component (i.e., that is functionally equivalent), including components which are not structurally equivalent to the disclosed structure which performs the function in the illustrated exemplary embodiments of the invention.

Specific examples of device and method have been described herein for purposes of illustration. These are only examples. The technology provided herein can be applied to device and method other than the examples described above. Many alterations, modifications, additions, omissions and permutations are possible within the practice of this invention. This invention includes variations on described embodiments that would be apparent to the skilled addressee, including variations obtained by: replacing features, elements and/or acts with equivalent features, elements and/or acts; mixing and matching of features, elements and/or acts from different embodiments; combining features, elements and/or acts from embodiments as described herein with features, elements and/or acts of other technology; and/or omitting combining features, elements and/or acts from described embodiments.

## Claims

1. A method for quantifying white blood cells in a blood sample, the method comprising the steps of:

   depositing the blood sample to a sample medium, the sample medium being positioned between a first electrode and a second electrode, the first electrode comprises one of a movable electrode or an array of electrodes arranged to cover different positions of the sample medium and for measuring capacitance across the sample medium for each of the different positions;
   providing a pulsating sweep voltage across the first electrode and the second electrode such that a potential gradient is formed across the sample medium;
   depositing a chemical analyte to the blood sample on the same medium, the chemical analyte for exclusively combining with the white blood cells of the blood sample and for changing the capacitance of the blood sample;
   determining a capacitance-voltage profile of the blood sample, before and after depositing the chemical analyte;
   quantifying the white blood cells in the blood sample based on the determined capacitance-voltage profile.

2. The method of claim 1, wherein quantifying the white blood cells in the blood sample comprises determining the difference between the capacitance-voltage profile of the blood sample before and after depositing the chemical analyte.

3. The method of claim 1, wherein determining the capacitance-voltage profile of blood sample before and after depositing the chemical analyte comprises measuring the capacitance at multiple locations on the sample medium and averaging the capacitance measured for a voltage value from the pulsating sweeping voltage.

4. The method of claim 1, the method further comprising comparing the quantified white blood cells in the blood sample against a look-up table comprising values of known cell counts for known white blood cell types; and determining a presence of an abnormality in the blood sample based on the comparison.

5. The method of claim 1, wherein quantifying the white blood cells in the blood sample is established by the ratio of a total Debye volume of the blood sample; over a volume of a single white blood cell multiplied by the ratio between an extracted Debye length of the blood sample and an extracted Debye length of the medium.

6. A system for quantifying white blood cells in a blood sample, the system comprising:

   a sample medium for holding the blood sample, the sample medium being positioned between a first electrode and a second electrode;

an electrical analyzer electrically coupled to the first electrode and the second electrode, the electrical analyzer supplying pulsating sweeping voltage across the first electrode and the second electrode such that potential gradient is formed across the sample medium, the electrical analyzer further configured for measuring capacitance across the sample medium for a given value of pulsating sweeping voltage before and after depositing a chemical analyte to the blood sample to generate a capacitance-voltage profile; and

a general processor in communication with the electrical analyzer, the general processor configured for quantifying the white blood cells in the blood sample based on the generated capacitance-voltage profile, **characterised in that** the first electrode comprises one of a moveable electrode or an array of electrodes arranged to cover different positions of the sample medium and for measuring capacitance across the sample medium for each of the different positions.

7. The system of claim 6, wherein the second electrode is a fixed electrode resting on a substrate for supporting the second electrode.

8. The system of claim 6 , wherein when the first electrode is a moveable electrode, movement of the moveable electrode is controlled by a controller, the controller in wired or wireless communication with the general processor.

9. The system of claim 8, wherein the moveable electrode has surface area less than a surface area of the second electrode or the sample medium.

10. The system of claim 9, wherein the general processor controls movement of the controller for moving the first electrode to different positions relative to the sample medium, wherein capacitance is measured for each of the different positions.

11. The system of claim 6, wherein the general processor determines the quantification of white blood cells in the blood sample by establishing the ratio of a total Debye volume of the blood sample; over a volume of a single white blood cell multiplied by the ratio between an extracted Debye length of the blood sample and an extracted Debye length of the medium.

## Patentansprüche

1. Verfahren zum Quantifizieren von weißen Blutzellen in einer Blutprobe, wobei das Verfahren die folgenden Schritte umfasst:

Ablagern der Blutprobe an einem Probenmedium, wobei das Probenmedium zwischen einer ersten Elektrode und einer zweiten Elektrode positioniert ist, wobei die erste Elektrode eines von einer bewegbaren Elektrode oder einer Reihe an Elektroden umfasst, die angeordnet ist, um unterschiedliche Positionen des Probenmediums abzudecken, und um Kapazität durch das Probenmedium für jede der unterschiedlichen Positionen zu messen;

Bereitstellen einer pulsierenden Kippspannung durch die erste Elektrode und die zweite Elektrode, sodass ein Potentialgradient durch das Probenmedium gebildet wird;

Ablagern eines chemischen Analyten an der Blutprobe an dem gleichen Medium, wobei der chemische Analyt dem exklusiven Kombinieren mit den weißen Blutzellen der Blutprobe und dem Ändern der Kapazität der Blutprobe dient;

Bestimmen eines Kapazitätsspannungsprofils der Blutprobe vor und nach dem Ablagern des chemischen Analyten;

Quantifizieren der weißen Blutzellen in der Blutprobe basierend auf dem bestimmten Kapazitätsspannungsprofil.

2. Verfahren nach Anspruch 1, wobei das Quantifizieren der weißen Blutzellen in der Blutprobe das Bestimmen des Unterschieds zwischen dem Kapazitätsspannungsprofil der Blutprobe vor und nach dem Ablagern des chemischen Analyten umfasst.

3. Verfahren nach Anspruch 1, wobei das Bestimmen des Kapazitätsspannungsprofils der Blutprobe vor und nach dem Ablagern des chemischen Analyten das Messen der Kapazität an mehreren Stellen an dem Probenmedium und das Mitteln der für einen Spannungswert aus der pulsierenden Kippspannung gemessenen Kapazität umfasst.

4. Verfahren nach Anspruch 1, wobei das Verfahren ferner das Vergleichen der quantifizierten weißen Blutzellen in der Blutprobe mit einer Lookup-Tabelle, die Werte von bekannten Zellzahlen für bekannte Arten von weißen Blutzellen umfasst; und das Bestimmen eines Vorhandenseins einer Anomalie in der Blutprobe basierend auf dem Vergleich umfasst.

5. Verfahren nach Anspruch 1, wobei das Quantifizieren der weißen Blutzellen in der Blutprobe durch das Verhältnis eines Debye-Gesamtvolumens der Blutprobe gegenüber einem Volumen einer einzelnen weißen Blutzelle multipliziert mit dem Verhältnis zwischen einer extrahierten Debye-Länge der Blutprobe und einer extrahierten Debye-Länge des Mediums festgelegt wird.

6. System zum Quantifizieren von weißen Blutzellen in einer Blutprobe, wobei das System Folgendes umfasst:

ein Probenmedium zum Halten der Blutprobe, wobei das Probenmedium zwischen einer ersten Elektrode und einer zweiten Elektrode positioniert ist;
einen elektrischen Analysator, der elektrisch an die erste Elektrode und die zweite Elektrode gekoppelt ist, wobei der elektrische Analysator pulsierende Kippspannung durch die erste Elektrode und die zweite Elektrode liefert, sodass ein Potentialgradient durch das Probenmedium gebildet wird, wobei der elektrische Analysator ferner konfiguriert ist, um Kapazität durch das Probenmedium für einen gegebenen Wert an pulsierender Kippspannung vor und nach dem Ablagern eines chemischen Analyten an der Blutprobe zu messen, um ein Kapazitätsspannungsprofil zu erzeugen; und
einen allgemeinen Prozessor in Kommunikation mit dem elektrischen Analysator, wobei der allgemeine Prozessor konfiguriert ist, um die weißen Blutzellen in der Blutprobe basierend auf dem erzeugten Kapazitätsspannungsprofil zu quantifizieren, **dadurch gekennzeichnet, dass** die erste Elektrode eines von einer bewegbaren Elektrode oder einer Reihe an Elektroden umfasst, die angeordnet ist, um unterschiedliche Positionen des Probenmediums abzudecken, und um Kapazität durch das Probenmedium für jede der unterschiedlichen Positionen zu messen.

7. System nach Anspruch 6, wobei die zweite Elektrode eine feste Elektrode ist, die auf einem Substrat zum Stützen der zweiten Elektrode aufliegt.

8. System nach Anspruch 6, wobei, wenn die erste Elektrode eine bewegbare Elektrode ist, Bewegung der bewegbaren Elektrode durch eine Steuerung gesteuert wird, wobei die Steuerung in verdrahteter oder drahtloser Kommunikation mit dem allgemeinen Prozessor steht.

9. System nach Anspruch 8, wobei die bewegbare Elektrode Oberflächenbereich von weniger als einem Oberflächenbereich der zweiten Elektrode oder des Probenmediums aufweist.

10. System nach Anspruch 9, wobei der allgemeine Prozessor Bewegung der Steuerung steuert, um die erste Elektrode zu unterschiedlichen Positionen relativ zu dem Probenmedium zu bewegen, wobei Kapazität für jede der unterschiedlichen Positionen gemessen wird.

11. System nach Anspruch 6, wobei der allgemeine Prozessor die Quantifizierung von weißen Blutzellen in der Blutprobe bestimmt, indem das Verhältnis eines Debye-Gesamtvolumens der Blutprobe gegenüber einem Volumen einer einzelnen weißen Blutprobe multipliziert mit dem Verhältnis zwischen einer extrahierten Debye-Länge der Blutprobe und einer extrahierten Debye-Länge des Mediums festgelegt wird.

**Revendications**

1. Procédé permettant de quantifier des globules blancs dans un échantillon de sang, le procédé comprenant les étapes de :

dépôt de l'échantillon de sang sur un support d'échantillon, le support d'échantillon étant positionné entre une première électrode et une seconde électrode, la première électrode comprenant l'un d'une électrode mobile ou d'un réseau d'électrodes agencées pour couvrir différentes positions du support d'échantillon et pour mesurer la capacitance à travers le support d'échantillon pour chacune des différentes positions ;
fourniture d'une tension de balayage pulsatoire à travers la première électrode et la seconde électrode de sorte qu'un gradient de potentiel est formé à travers le support d'échantillon ;
dépôt d'un analyte chimique dans l'échantillon de sang sur le même support, l'analyte chimique étant associé exclusivement aux globules blancs de l'échantillon de sang et permettant de modifier la capacité électrique de l'échantillon de sang ;

détermination d'un profil capacité électrique-tension de l'échantillon de sang, avant et après le dépôt de l'analyte chimique ;

quantification des globules blancs dans l'échantillon de sang sur la base du profil capacité électrique-tension déterminé.

2. Procédé selon la revendication 1, dans lequel la quantification des globules blancs dans l'échantillon de sang comprend la détermination de la différence entre le profil capacité électrique-tension de l'échantillon de sang avant et après le dépôt de l'analyte chimique.

3. Procédé selon la revendication 1, dans lequel la détermination du profil capacité électrique-tension de l'échantillon de sang avant et après le dépôt de l'analyte chimique comprend la mesure de la capacité électrique en de multiples emplacements sur le support d'échantillon et l'établissement de la moyenne de la capacité électrique mesurée pour une valeur de tension à partir de la tension de balayage pulsatoire.

4. Procédé selon la revendication 1, le procédé comprenant en outre la comparaison des globules blancs quantifiés dans l'échantillon de sang avec une table de recherche comprenant des valeurs de comptages de cellules connus pour des types de globules blancs connus ; et la détermination d'une présence d'une anomalie dans l'échantillon de sang sur la base de la comparaison.

5. Procédé selon la revendication 1, dans lequel la quantification des globules blancs dans l'échantillon de sang est établie par le rapport d'un volume de Debye total de l'échantillon de sang ; sur un volume d'un seul globule blanc multiplié par le rapport entre une longueur de Debye extraite de l'échantillon de sang et une longueur de Debye extraite du support.

6. Système pour quantifier des globules blancs dans un échantillon de sang, le système comprenant :

un support d'échantillon pour maintenir l'échantillon de sang, le support d'échantillon étant positionné entre une première électrode et une seconde électrode ;

un analyseur électrique couplé électriquement à la première électrode et à la seconde électrode, l'analyseur électrique fournissant une tension de balayage pulsatoire à travers la première électrode et la seconde électrode de sorte qu'un gradient de potentiel est formé à travers le support d'échantillon, l'analyseur électrique étant en outre conçu pour mesurer la capacité électrique à travers le support d'échantillon pour une valeur donnée de tension de balayage pulsatoire avant et après le dépôt d'un analyte chimique dans l'échantillon de sang pour générer un profil capacité électrique-tension ; et

un processeur général en communication avec l'analyseur électrique, le processeur général étant conçu pour quantifier les globules blancs dans l'échantillon de sang sur la base du profil capacité électrique-tension généré, **caractérisé en ce que** la première électrode comprend l'un d'une électrode mobile ou d'un réseau d'électrodes agencées pour couvrir différentes positions du support d'échantillon et pour mesurer la capacité électrique à travers le support d'échantillon pour chacune des différentes positions.

7. Système selon la revendication 6, dans lequel la seconde électrode est une électrode fixe reposant sur un substrat pour soutenir la seconde électrode.

8. Système selon la revendication 6, dans lequel, lorsque la première électrode est une électrode mobile, le déplacement de l'électrode mobile est commandé par un dispositif de commande, le dispositif de commande étant en communication filaire ou sans fil avec le processeur général.

9. Système selon la revendication 8, dans lequel l'électrode mobile a une surface inférieure à une surface de la seconde électrode ou du support d'échantillon.

10. Système selon la revendication 9, dans lequel le processeur général commande le déplacement du dispositif de commande pour déplacer la première électrode dans différentes positions par rapport au support d'échantillon, dans lequel la capacité électrique est mesurée pour chacune des différentes positions.

11. Système selon la revendication 6, dans lequel le processeur général détermine la quantification des globules blancs dans l'échantillon de sang en établissant le rapport d'un volume de Debye total de l'échantillon de sang ; sur un volume d'un seul globule blanc multiplié par le rapport entre une longueur de Debye extraite de l'échantillon de sang et une longueur de Debye extraite du support.

FIG 1

FIG 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 15121958 A
- WO 2014064042 W
- WO 2016030713 A1
- US 121958
- US 20170160232 A1

**Non-patent literature cited in the description**

- **FRICKE.** *Nature,* 1953, vol. 172, 731-732